# EUROPÄISCHE PATENTANMELDUNG

(11) **EP 2 495 026 A1**
(43) Veröffentlichungstag der Anmeldung: **05.09.2012**
(21) Anmeldenummer: 12157829.8
(22) Anmeldetag: 02.03.2012
(51) Int. Cl.: B01D 46/10, B01D 46/42, B65G 53/00, B65G 53/60

(54) **Verfahren zum Inspizieren einer Fremdkörperfalle und entsprechende Fremdkörperfalle**

(30) Priorität: 02.03.2011 DE 102011012875
(71) Anmelder: RWE Power AG, 45128 Essen (DE)
(72) Erfinder: Lange, Raimund, 50259 Pulheim (DE); Kappel, Karlheinz, 58455 Witten (DE); Karpert, Armenak, 51381 Leverkusen (DE)
(74) Vertreter: Heine, Christian Klaus

(57) **Zusammenfassung**

Das erfindungsgemäße Verfahren zum Inspizieren einer Fremdkörperfalle (1) zum Einsatz in einer pneumatischen Förderleitung zur Förderung eines Förderstroms (6) umfassend ein Fördermedium und granulares Fördergut, die zwei Förderanschlüsse (2), die in eine Abscheidekammer (4) mit einem Abscheideelement (5) münden, welches strömungstechnisch so zwischen den Förderleitungsanschlüssen (2) ausgebildet ist, dass ein durch die Förderleitungsanschlüsse (2) und die Abscheidekammer (4) strömender Förderstrom (6) durch das Abscheideelement (5) strömt und dabei Fremdkörper (12) oberhalb einer vorgebbaren Größe abgeschieden werden, weiterhin umfassend einen reversibel verschließbaren Wartungszugang (7), zeichnet sich dadurch aus, dass durch einen weiteren mit der Abscheidekammer (4) verbundenen Inspektionsanschluss (8) eine optische Inspektion der Abscheidekammer (4) auf das Vorliegen von Fremdkörpern (12) erfolgt.

Die erfindungsgemäße Fremdkörperfalle (1) erlaubt auf einfache Art und Weise durch den Inspektionsanschluss (8) eine schnelle Inspektion der Fremdkörperfalle (1) auf Fremdkörper (12) und eine Überwachung des Zustands des Abscheideelements (5). So kann für normale Inspektionen, bei denen üblicherweise keine Fremdkörper (12) in der Abscheidekammer (4) vorliegen, auf das aufwendige und zeitintensive Öffnen des Wartungszugangs (7) verzichtet werden.

## Beschreibung

Gegenstand der vorliegenden Erfindung ist ein Verfahren zum Inspizieren einer Fremdkörperfalle, die beim pneumatischen Transport eines Förderguts mit einem Fördermedium zum Einsatz kommt, um nicht zum Fördergut gehörende Fremdkörper abzuscheiden sowie eine entsprechende Fremdkörperfalle. Der bevorzugte Einsatzbereich der vorliegenden Erfindung liegt bei der Inspektion von Fremdkörperfallen beim pneumatischen Transport von Braunkohle und Braunkohleprodukten wie beispielsweise Braunkohlenstaub, Braunkohlenkoksstaub oder ähnliches.

Granulare Medien werden oft auf pneumatischem Wege gefördert, indem ein granulares Fördergut mit einem Fördermedium wie beispielsweise Luft, welche unter einem Über- oder Unterdruck steht, gefördert wird. Oft wird diese Transportart zum Transport der Medien, die im Rahmen dieses Textes auch als Güter oder Fördergüter bezeichnet werden, zur Weiterverarbeitung verwendet. Neben den üblichen Fremdkörpern, die in granularen Medien vorkommen, können hierbei weitere Fremdkörper in das Fördergut gelangen. Hier kann es sich z. B. um abgesplitterte Rostablagerungen aus den pneumatischen Leitungen oder ähnliches handeln. Das heißt, dass selbst dann, wenn es bereits vor dem pneumatischen Transport des Förderguts eine Qualitätskontrolle gegeben hat, man nicht ausschließen kann, dass nach dem pneumatischen Transport Fremdkörper im Fördergut vorliegen. Um eine Verunreinigung des Förderguts zu verhindern und um eventuell mögliche Beschädigungen von Apparaturen stromabwärts der pneumatischen Förderleitung zu verhindern, werden oftmals Fremdkörperfallen eingesetzt, mit denen die entsprechenden Fremdkörper aus dem Förderstrom von dem Fördergut im Fördermedium getrennt werden.

Insbesondere bei der pneumatischen Förderung von granularen Brennstoffen wie beispielsweise Kohle aber auch beispielsweise bei Mehl ist das Abscheiden von Fremdkörpern wichtig. Diese können, wenn sie beispielsweise aus Metall bestehen, durch Funkenbildung zu einer Zündung des Kohlenstaubs führen, welche zu Verpuffungen oder Explosionen führen kann. Zudem kann es dazu kommen, dass weitere Bauteile durch die Fremdkörper beschädigt oder in ihrer Funktion beeinträchtigt werden, wie beispielsweise Zellradschleusen oder der entsprechende mit dem Brennstoff betriebene Brenner. Insbesondere in solchen Systemen sind Elemente im Rahmen der pneumatischen Förderung für relativ hohe Drücke auszulegen, da es regelmäßig erforderlich ist, die bei potentiell möglichen Explosionen entstehenden Drücke aufzufangen. Gleichzeitig muss gewährleistet sein, dass die entsprechenden Fremdkörperfallen wartbar sind, das heißt insbesondere, dass abgeschiedene Fremdkörper entfernt werden können.

Dies gemeinsam ergibt insbesondere bei der pneumatischen Förderung von Kohle das Problem, dass die entsprechenden Wartungsarbeiten sehr aufwendig sind, da schwere, druckbelastbare und mit einem druckbelastbaren Verschluss versehene Öffnungen geöffnet und wieder verschlossen werden müssen. Dies ist sehr zeitaufwendig und erfordert für einen langen Zeitraum einen Stillstand der pneumatischen Förderung. Insbesondere dann, wenn festgestellt wird, dass keine Fremdkörper vorliegen, ist dies ineffizient und kostenintensiv, da hier zwar eine Inspektion der Fremdkörperfalle erfolgt, aber keine Wartung der Fremdkörperfalle notwendig ist.

Hiervon ausgehend liegt der vorliegenden Erfindung die Aufgabe zugrunde, die aus dem Stand der Technik bekannten Nachteile zumindest teilweise zu überwinden und insbesondere ein Verfahren zu Inspektion einer Fremdkörperfalle vorzuschlagen, bei welchem die entsprechenden Ausfallzeiten der pneumatischen Förderung durch Inspektion der Fremdkörperfalle signifikant reduziert werden können, sowie eine entsprechende Fremdkörperfalle anzugeben.

Diese Aufgaben werden gelöst mit den Merkmalen der unabhängigen Ansprüche. Die abhängigen Ansprüche sind auf vorteilhafte Weiterbildungen gerichtet.

Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren zum Inspizieren einer Fremdkörperfalle zum Einsatz in einer pneumatischen Förderleitung zur Förderung eines Förderstroms umfassend ein Fördermedium und granulares Fördergut, die zwei Förderanschlüsse, die in eine Abscheidekammer mit einem Abscheideelement münden, welches strömungstechnisch so zwischen den Förderleitungsanschlüssen ausgebildet ist, dass ein durch die Förderleitungsanschlüsse und die Abscheidekammer strömender Förderstrom durch das Abscheideelement strömt und dabei Fremdkörper oberhalb einer vorgebbaren Größe abgeschieden werden, wobei die Fremdkörperfalle weiterhin einen reversibel verschließbaren Wartungszugang umfasst, zeichnet sich dadurch aus, dass durch einen weiteren mit der Abscheidekammer verbundenen Inspektionsanschluss eine optische Inspektion der Abscheidekammer auf das Vorliegen von Fremdkörpern erfolgt.

Der Wartungszugang erlaubt einen Zugang zur Abscheidekammer ohne diese von der Förderleitung zu trennen. Das Vorsehen eines zusätzlichen Inspektionsanschlusses ermöglicht es, eine Inspektion der Abscheidekammer und/oder des Abscheideelements vornehmen zu können, ohne den Wartungszugang der Abscheidekammer öffnen zu müssen. Der Wartungszugang dient neben der Reinigung der Abscheidekammer auch zum Wechsel des Abscheideelements, wenn nötig, und muss deshalb eine entsprechende Größe aufweisen. Um bei einer solchen Größe einen reversibel öffen- und verschließbaren, druckdichten Verschluss auch bei einem Mehrfachen des Betriebsdrucks der pneumatischen Förderung, beispielsweise bis zu 10 bar, gewährleisten zu können, sind hier eine Vielzahl von Schraubverbindungen nötig. Diese zu lösen und später wieder festzuziehen erfordert einen hohen zeitlichen Aufwand, der bei einer Inspektion durch den Wartungszugang zu einer zeitaufwendigen Inspektion und folglich zu einem langen Ausfall der pneumatischen Förderung führt. Zudem sind auch die Verschlüsse für den Wartungszugang schwer, da auch sie die entsprechenden hohen Drücke aufnehmen können müssen und das bei einer relativ großen Fläche. Dies führt zu potentiellen Verletzungsrisiken des den Wartungszugang nutzenden Personals.

Der zusätzliche Inspektionsanschluss ist bevorzugt nur mit einem kleinen Durchmesser versehen, so dass hier auch bei einem druckdichten Verschluss nur wenige Schrauben geöffnet werden müssen und der entsprechende Verschluss deutlich leichter ist. Hierdurch kann die entsprechende Inspektion schnell und damit kostengünstig erfolgen und das Verletzungsrisiko ist reduziert. Dies beruht auf der Annahme, dass üblicherweise keine Fremdkörper oder selten Fremdkörper in der Fremdkörperfalle gefunden werden, beispielsweise weil das Fördergut in seiner Qualität bekannt und bereits vorsondiert wurde, so dass lediglich Verunreinigungen, die auf dem Wege bis zur Fremdkörperfalle in das Fördergut gelangen, abgefangen werden müssen.

In solchen Fällen ist oft aus Sicherheitsbedürfnissen heraus eine Inspektion notwendig, obwohl diese im Regelfall kein Ergebnis liefern wird. In diesen Fällen ist der Einsatz des erfindungsgemäßen Verfahrens besonders vorteilhaft, da dann die entsprechenden Regelungen genau erfüllt werden können, jedoch der Aufwand erheblich verringert wird. Der Wartungszugang ist nur dann zu öffnen, wenn Fremdkörper in der Abscheidekammer vorliegen und/oder das Abscheideelement beschädigt ist und erneuert oder repariert werden muss.

Insbesondere beim Einsatz zur pneumatischen Förderung von granularer Kohle, bevorzugt Stein- oder Braunkohle, besonders bevorzugt Braunkohle, kann es durch Fremdkörper, die durch die pneumatische Förderung in ein entsprechendes Silo eingetragen werden, zu Funkenbildung kommen, die zu einer Entzündung des ebenfalls vorliegenden Kohlenstaubs führen kann. Weiterhin kann die zur Dosierung in einen stromabwärts des Silos ausgebildeten Brenner oder zur weiteren Verarbeitung üblicherweise genutzte Zellradschleuse in ihrer Funktion beeinträchtigt werden, diese kann blockieren und den Betrieb einstellen oder auch beschädigt werden. Werden Fremdkörper in der granularen Kohle in den Brenner eingetragen, so kommt es dort regelmäßig zu Beschädigungen oder zu einer ungenügenden oder schadstoffreichen Verbrennung.

Diese dadurch notwendige Fremdkörperabscheidung kann durch das erfindungsgemäße Verfahren in vorteilhafter Weise vereinfacht erfolgen. Kohlenstaub und granulare Kohle sind zudem in der pneumatischen Förderung bei entsprechenden Förderdrücken und -geschwindigkeiten abrasiv, was zur Abnutzung des Abscheideelements, welches üblicherweise als Sieb gestaltet ist, führt, so dass eine regelmäßige Inspektion des Zustands des Siebs vorteilhaft ist. Dies gilt auch für andere abrasive Fördergüter oder Fördermedien.

Der Inspektionsanschluss ist bevorzugt so gestaltet, dass die Schwerkraft nicht dazu führt, dass sich eventuell vorhandener Staub im Inspektionsanschluss sammelt. Bevorzugt ist eine Ausgestaltung, bei der der Inspektionsanschluss nach oben weist. So kann verhindert werden, dass bei Öffnen des Inspektionsanschlusses entsprechender Staub austritt und es zu einer Verschmutzung der Umgebung kommt.

Gemäß einer vorteilhaften Ausgestaltung des erfindungsgemäßen Verfahrens erfolgt die Inspektion endoskopisch durch Einführen eines Endoskops.

Hierbei kann es sich um ein Endoskop handeln, bei dem durch einen Lichtleiter ein entsprechender Benutzer direkt durch das Endoskop in die Abscheidekammer blickt oder ein Endoskop, bei dem eine entsprechende Kamera ausgebildet ist, die über eine flexible Leitung mit einem Anzeigemedium verbunden ist. Das Endoskop mit einem flexiblen Hals oder einer flexiblen Leitung erlaubt es in vorteilhafter Weise, eine Ausrichtung auf das Abscheidemittel zu wählen, bei dem im Wesentlichen senkrecht durch dieses hindurchgeblickt wird. Dies vermindert optische Einflüsse durch das Abscheideelement. Üblicherweise werden solche Fremdkörperfallen so betrieben, dass sich die abzuscheidenden Fremdkörper unterhalb des Abscheidemittels sammeln. In diesem Fall ist es bevorzugt, wenn der Inspektionsanschluss so ausgebildet ist, dass dieser oberhalb des Abscheideelements liegt. Es erfolgt also eine Inspektion durch das Abscheideelement hindurch, der Inspektionsanschluss kann nicht durch sich in ihm sammelnde Fremdkörper blockiert werden.

Gemäß einer weiteren Ausgestaltung des erfindungsgemäßen Verfahrens wird der Zustand des Abscheideelements inspiziert.

So kann in vorteilhafter Weise eine eventuelle Beschädigung oder ein Verschleiß des Abscheideelements frühzeitig erkannt werden, so dass Gegebenenfalls verhindert werden kann, dass Abschabungen, Abrieb oder Abrisse vom Abscheideelement selbstals Fremdkörper zu einer Verunreinigung des Förderguts führen und die Fremdkörperabscheidung durch Löcher im Abscheideelement beeinträchtigt wird. Dies ist insbesondere bei der pneumatischen Förderung von abrasiven Fördergütern vorteilhaft.

Gemäß einem weiteren Aspekt der vorliegenden Erfindung wird eine Fremdkörperfalle zum Abscheiden von Fremdkörpern zum Einsatz in einer pneumatischen Förderleitung zur Förderung eines Förderstroms umfassend ein Fördermedium und granulares Fördergut vorgeschlagen, wobei diese zwei Förderanschlüsse umfasst, die in eine Abscheidekammer mit einem Abscheideelement münden, welches strömungstechnisch so zwischen den Förderleitungsanschlüssen ausgebildet ist, dass ein durch die Förderleitungsanschlüsse und die Abscheidekammer strömender Förderstrom durch das Abscheideelement strömt und dabei Fremdkörper einer vorgebbaren Spezifikation abgeschieden werden, weiterhin umfassend einen reversibel verschließbaren Wartungszugang, durch den die Abscheidekammer gereinigt und gewartet werden kann. Die erfindungsgemäße Fremdkörperfalle zeichnet sich dadurch aus, dass ein weiterer Inspektionsanschluss vorgesehen ist, durch den eine Inspektion der Abscheidekammer auf das Vorliegen von Fremdkörpern erfolgen kann. Unter einer vorgebbaren Spezifikation wird insbesondere verstanden, dass Fremdkörper abgeschieden werden, die einen Größe oberhalb einer vorgebbaren Grenzgröße, die beispielsweise durch eine Maschengröße eines als Abscheideleement ausgebildeten Siebs vorgegeben ist, abgeschieden werden. Alternativ oder zusätzlich können auch weitere Spezifikationen vorgesehen sein, die sich beispielsweise auf die elektrostatische Aufladbarkeit, eine Ablenkbarkeit im elektromagnetischen Feld und ähnliches bezieht.

Gemäß einer vorteilhaften Ausgestaltung der Fremdkörperfalle ist das Abscheideelement so ausgerichtet, dass es im Betrieb in einem ersten Bereich zur Ansammlung von Fremdkörpern kommen kann, wobei der Inspektionsanschluss in einen zweiten Bereich der Abscheidekammer mündet, der durch das Abscheideelement von dem ersten Bereich getrennt ist.

In vorteilhafter Weise werden erster und zweiter Bereich durch das Abscheideelement getrennt. Je nach Ausrichtung des Abscheideelements relativ zum Förderstrom gibt es eine bevorzugte Seite des Abscheideelements, auf der zur Abscheidung von Fremdkörpern kommt. Dieses ist der erste Bereich. Der zweite Bereich ist dann der Bereich der Abscheidekammer, der vom ersten Bereich durch das Abscheideelement getrennt ist und diesem gegenüber auf der anderen Seite des Abscheideelements liegt. Bevorzugt ist eine Ausgestaltung, bei der der Inspektionsanschluss in diesem zweiten Bereich ausgebildet ist, da so das Eindringen von Fremdkörpern in den Inspektionsanschluss verhindert werden kann.

Gemäß einer vorteilhaften Ausgestaltung der Fremdkörperfalle wird durch den Inspektionsanschluss mindestens ein Messfühler zur Überwachung einer Zustandsgröße des Förderstroms in strömungstechnische Verbindung mit der Abscheidekammer gebracht.

So kann beispielsweise durch den Inspektionsanschluss ein Temperaturfühler oder ähnliches eingebracht werden, so dass dieser entweder im Inspektionsanschluss selbst liegt, der in strömungstechnischer Verbindung mit der Abscheidekammer steht oder durch den Inspektionsanschluss in die Abscheidekammer geführt wird. Hierbei kann der Messfühler dauerhaft oder nur zeitweise durch den Inspektionsanschluss eingebracht werden. Beispielsweise kann der Messfühler in den Inspektionsanschluss eingeschweißt werden. Bevorzugt ist hierbei eine Ausgestaltung, bei der mindestens einer der folgenden Messfühler in strömungstechnische Verbindung mit der Abscheidekammer gebracht wird:
a. ein Temperaturfühler zur Überwachung der Temperatur des Förderstroms; und
b. ein Drucksensor zur Überwachung des Drucks des Förderstroms.

Durch die Überwachung des Drucks kann in einfacher Weise die grundsätzliche Funktion der pneumatischen Förderung in der Fremdkörperfalle überwacht werden. Ein Temperaturfühler zur Überwachung der Temperatur des Förderstroms ist insbesondere dann von Vorteil, wenn es zur Selbstentzündung des Förderguts kommen kann, wie dies beispielsweise bei Braunkohle oder Braunkohlenstaub möglich ist. So können in wirksamer Art und Weise weitere Sicherheitsmaßnahmen implementiert werden, durch die Explosionen und Selbstentzündungen wirksam vermieden werden können.

Die für das erfindungsgemäße Verfahren offenbarten Details und Vorteile lassen sich auf die erfindungsgemäße Fremdkörperfalle übertragen und umgekehrt.

Das erfindungsgemäße Verfahren und die erfindungsgemäße Fremdkörperfalle können insbesondere dazu eingesetzt werden, in einem Betrieb mit umfänglichen pneumatischen Förderungen Problemfälle und Fehlerquellen herauszufinden, da durch Aufnahme der Inspektionsdaten bei mehreren Fremdkörperfallen eine Statistik gewonnen werden kann, die es erlaubt, Fehlerquellen zu lokalisieren. So können beispielsweise diese Daten dazu genutzt werden, Quellen von Rostabplatzungen aufzufinden und Gegenmaßnahmen einzuleiten.

Im Folgenden wird die Erfindung anhand der beiliegenden Figuren näher erläutert, ohne auf die dort gezeigten Ausführungsbeispiele beschränkt zu sein. Es zeigen schematisch und exemplarisch:
- Fig. 1:: eine Ansicht eines ersten Ausführungsbeispiels einer erfindungsgemäßen Fremdkörperfalle;
- Fig. 2:: einen Schnitt durch das erste Ausführungsbeispiel einer erfindungsgemäßen Fremdkörperfalle;
- Fig. 3: einen Schnitt durch ein zweites Ausführungsbeispiel einer erfindungsgemäßen Fremdkörperfalle;
- Fig. 4: eine seitliche Ansicht eines dritten Ausführungsbeispiels einer erfindungsgemäßen Fremdkörperfalle; und
- Fig. 5: eine weitere seitliche Ansicht des dritten Ausführungsbeispiels einer erfindungsgemäßen Fremdkörperfalle.

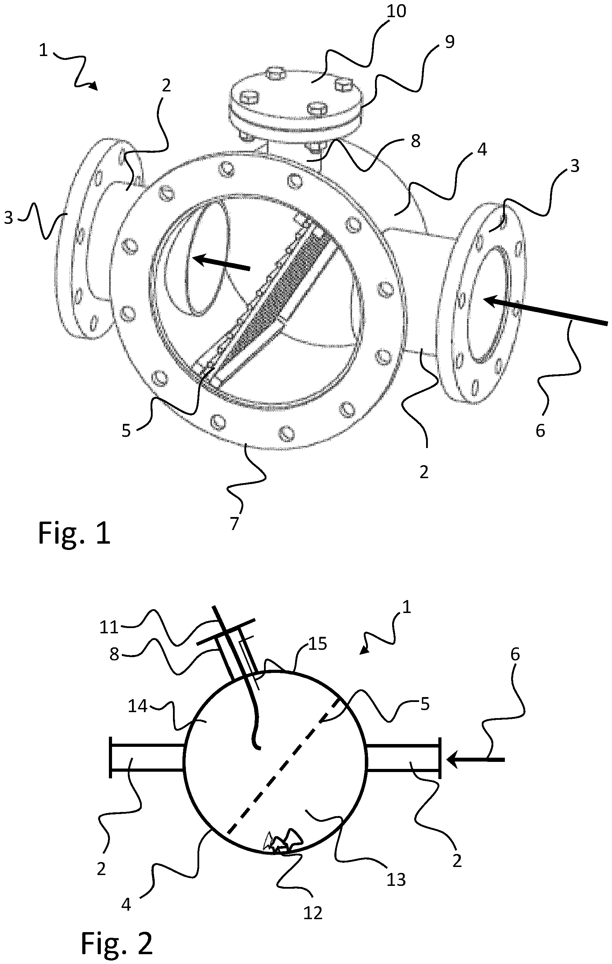

Fig. 1 zeigt schematisch eine erfindungsgemäße Fremdkörperfalle 1. Diese Fremdkörperfalle 1 wird in einer hier nicht gezeigten pneumatischen Förderleitung eingesetzt, die zur Förderung eines Förderstroms umfassen ein Fördermedium und ein granulares Fördergut dient. Bevorzugt ist eine Ausgestaltung, bei der das Fördermedium Luft und das granulare Fördergut einen granularen Brennstoff, bevorzugt Kohle einer bestimmten Korngrößenverteilung, besonders bevorzugt Braunkohle und Braunkohlenprodukte wie beispielsweise Braunkohlenstaub und Braunkohlenkoksstaub einer bestimmten Korngrößenverteilung, umfasst. Über zwei Förderanschlüsse 2 wird die Fremdkörperfalle 1 mit der nicht gezeigten Förderleitung verbunden. Hierzu erfolgt eine Verbindung der Förderleitung mit den entsprechenden Flanschen 3 der Förderanschlüsse 2. Die Förderanschlüsse 2 münden in eine Abscheidekammer 4. Diese Abscheidekammer 4 stellt eine Aufweitung des durchströmbaren Querschnitts im Vergleich zu den Förderanschlüssen 2 und üblicherweise auch zur Förderleitung dar. In der Abscheidekammer 4 ist ein Abscheideelement 5 ausgebildet. Dieses umfasst ein Metallsieb einer bestimmten Maschenweite, welche größer ist als die entsprechende Körnung des granularen Förderguts, so dass dieses durch das Abscheideelement durchtreten kann, während Fremdkörper, deren Durchmesser größer ist als die Maschenweite, nicht durch das Abscheideelement nicht treten können.

Im Betrieb wird der Förderstrom 6 wie gezeigt durch die Fremdkörperfalle 1 geleitet. Hierbei ist die Fremdkörperfalle 1 so ausgerichtet, dass die Fremdkörper, die das Abscheideelement 5 nicht durchtreten können, vom Abscheideelement 5 weg nach unten fallen und so das Abscheideelement 5 nicht teilweise blockieren können. Die Fremdkörper sammeln sich deshalb vor und unter dem Abscheideelement 5. Um einen größeren effektiv durchströmbaren Querschnitt des Abscheideelements 5 zu erreichen und so den Druckverlust durch das Abscheideelement 5 zu verringern, ist dieses geneigt und nicht senkrecht zur Richtung des Förderstroms 6 ausgebildet. Hierdurch wird die effektiv durchströmbare Fläche des Abscheideelements 5 vergrößert.

Das Abscheideelement 5 ist also so in der Abscheidekammer 4 ausgebildet, dass der Förderstrom 6, welcher von einem Förderanschluss 2 zum anderen strömt, das Abscheideelement 5 vollständig durchströmt. Hierdurch werden sämtliche Fremdkörper im Förderstrom 6, die größer sind als die Maschenweite des Abscheideelements 5, abgeschieden.

Die Maschen sind hierbei bevorzugt rechteckig oder quadratisch ausgebildet. Bevorzugt ist eine quadratische Ausgestaltung mit einer Maschenweite von etwa 20 mm. Um nun das Abscheideelement 5 gegebenenfalls wechseln zu können und Fremdkörper, die sich in der Abscheidekammer 4 angesammelt haben entfernen zu können, weist die Fremdkörperfalle 1 einen reversibel verschließbaren Wartungszugang 7 auf. Im vorliegenden Ausführungsbeispiel weist dieser ebenfalls einen Flansch auf. Der Wartungszugang 7 muss so groß ausgestaltet sein, dass eine Reinigung von Fremdkörpern einfach möglich ist und das Abscheideelement 5 getauscht werden kann.

Dies bedingt eine relativ große Öffnung des Wartungszugangs 7, die beim Verschließen des Wartungszugangs 7 so abgedeckt werden muss, dass kein Druckverlust durch diese entsteht und zwar sowohl beim Betrieb der pneumatischen Förderleitung als auch in Notfällen, beispielsweise im Fall von Explosion oder Verpuffungen in der Förderleitung, die durch Funkenschlag durch Fremdkörper gegebenenfalls auftreten können. Folglich ist der Wartungszugang 7 so gesichert, dass er auch Drücken von beispielsweise dem Fünffachen des Förderdrucks des Förderstroms 6 standhalten kann. Um dies zu erreichen und gleichzeitig eine reversible Verschließbarkeit des Wartungszugangs 7 zu ermöglichen, wird oftmals ein massiver Verschluss mit einer großen Anzahl von Schrauben vorgesehen, die im Falle der Wartung der Fremdkörperfalle 1 sämtlich gelöst werden müssen, um durch den Wartungszugang 7 Zugriff auf die Abscheidekammer 4 und das Abscheideelement 5 zu erlangen.

Wird die Fremdkörperfalle 1 beispielsweise beim Befüllen von Silos eingesetzt und soll dort wirkungsvoll das Eindringen von Fremdkörpern verhindert werden, so ist eine regelmäßige Inspektion dieser Fremdkörperfalle notwendig, um den sicheren Betrieb bei der Befüllung oder auch Entleerung des Silos zu gewährleisten. Müsste nun jedes Mal der Wartungszugang 7 geöffnet werden, um zu überprüfen, ob Fremdkörper in der Abscheidekammer 4 vorliegen, so stellt dies einen erheblichen Aufwand dar. Je nach Druckauslegung und Größer der Fremdkörperfalle 1 müssen eine Vielzahl von Schrauben gelöst und später wieder angezogen werden, der Deckel des Wartungszugangs 7 ist entsprechend schwer, um den eventuell auftretenden Drücken standhalten zu können. Zudem kann es bei den entsprechenden Arbeiten am Wartungszugang 7 zu montierende Dichtung zu Problemen führen, die auch durch die Größe der entsprechenden Dichtung gemeinsam mit den auftretenden Drücken bedingt sind. So kann diese bei De- und Remontage leichter beschädigt werden als einach einem der Ansprüche kleinere Dichtung, aufgrund der Einbausituation kann die für den dichtenden Abschluss des Wartungszugangs 7 notwendige genaue Positionierung der Dichtung erschwert werden. Somit ist die Wartung der Fremdkörperfalle 1 stets mit einem hohen Aufwand verbunden. Er ist zeitaufwändig, eine pneumatische Förderung durch die Fremdkörperfalle 1 ist in Zeiten der Wartung nicht möglich.

Die Abscheidekammer 4 weist weiterhin erfindungsgemäß einen weiteren Inspektionsanschluss 8 auf, durch den ebenfalls ein Zugang zur Abscheidekammer 4 möglich ist. Bevorzugt ist eine Ausgestaltung, bei der der Durchmesser des Inspektionsanschlusses 8 kleiner ist als der Durchmesser der Förderanschlüsse 2 und wesentlich kleiner als der Durchmesser des Wartungszugangs 7. Bevorzugt ist eine Ausgestaltung, bei der der Quotient des Durchmessers des Inspektionsanschlusses 8 und dem Durchmesser der Förderleitung bzw. der Förderanschlüsse 2 (jeweils bezogen auf den frei durchströmbaren Querschnitt) kleiner ist als 0,5, bevorzugt im Bereich von 1/3 und weniger. Der Quotient des frei durchströmbaren Durchmessers des Inspektionsanschlusses 8 und dem frei durchströmbaren Durchmesser des Wartungszugangs 7 liegt bevorzugt bei 1/6 und weniger, besonders bevorzugt bei 1/8 und weniger.

Der deutlich verringerte Durchmesser des Inspektionsanschlusses 8 vereinfacht das Erstellen eines druckdichten Verschlusses des Inspektionsanschlusses 8 erheblich. Hierzu wird an einen Flansch 9 des Inspektionsanschlusses 8 ein Verschluss 10 angesetzt und mit diesem über Schrauben lösbar verbunden. Aufgrund des geringeren Durchmessers sind erheblich weniger Schrauben notwendig als bei dem Wartungszugang 7. Dies gestattet eine schnelle Inspektion der Abscheidekammer 4 durch den Inspektionsanschluss 8, so dass die Rüstzeiten im Vergleich zur Öffnung des Wartungszugangs 7 signifikant verringert werden können. Die Anmelderin erreicht hier eine Verringerung der Rüstzeiten um 90 % und mehr. Durch den Inspektionsanschluss 8 kann nun eine optische Inspektion der Abscheidekammer 4 und/oder des Abscheideelements 5 auf das Vorliegen von Fremdkörpern im Fremdkörperraum 15 und Beschädigungen erfolgen.

Der Inspektionsanschluss 8 ist bevorzugt so ausgebildet, dass er im eingebauten Zustand, das heißt bei Verbindung der nicht gezeigten Förderleitung mit den Förderanschlüssen 2 oberhalb des Abscheideelements 5 ausgebildet ist, um zu verhindern, dass sich im Inspektionsanschluss 8 Staub und ähnliches ansammelt. Die Longitudinalachse des Inspektionsanschlusses 8 kann mit der Longitudinalachse der Förderanschlüsse 2 einen rechten Winkel bilden, jedoch kann der Inspektionsanschluss 8 auch geneigt gegenüber diesen Achsen ausgebildet sein. Die Inspektion durch den Inspektionsanschluss 8 erfolgt üblicherweise auf optischem Wege, bevorzugt durch Einbringung eines endoskopischen Elements, wie eines Endoskops oder einer endoskopisch arbeitenden Kamera. Hierdurch ist es möglich, die optischen Effekte beim Inspizieren des Raums unterhalb des Abscheideelements 5 durch das Abscheideelement 5 zu minimieren, indem das Endoskop beziehungsweise dessen Öffnung im Wesentlichen senkrecht auf das Abscheideelement 5 ausgerichtet wird.

Fig. 2 zeigt ein zweites Ausführungsbeispiel einer erfindungsgemäßen Fremdkörperfalle 1 im Querschnitt. Gleiche Elemente wie im ersten Ausführungsbeispiel sind mit gleichen Bezugszeichen versehen. Fig. 2 ist zu entnehmen, dass ein Endoskop 11 durch den Inspektionsanschluss 8 in die Abscheidekammer 4 eingeführt wird und dort benutzt wird, um das Abscheideelement 5 zu inspizieren. Durch eine entsprechende Einstellung des Endoskops 11 ist es auch möglich, nach Fremdkörpern 12 in der Abscheidekammer 4 zu suchen. In diesem Ausführungsbeispiel schließt die Longitudinalachse des Inspektionsanschlusses 8 keinen rechten Winkel mit den Longitudinalachsen der Förderanschlüsse 2 ein. Das Abscheideelement 5 teilt die Abscheidekammer 4 in einen ersten Bereich 13, in dem sich eventuelle vorhandene Fremdkörper 12 sammeln und den ein Förderstrom 6 vor Durchtreten durch das Abscheideelement 5 durchströmt und einen zweiten Bereich 14, den der Förderstrom 6 nach Durchströmen durch das Abscheideelement 5 durchströmt. Der Inspektionsanschluss 8 ist in dem zweiten Bereich 14 ausgebildet.

Die Fremdkörperfalle 1 weist ebenfalls einen Messfühler 15 auf, der durch den Inspektionsanschluss 8 in strömungstechnische Verbindung mit der Abscheidekammer 4 gebracht wird. Im vorliegenden Ausführungsbeispiel ragt der Messfühler 15 in die Abscheidekammer 4 hinein, es ist auch möglich, dass der Messfühler 15 lediglich in den Inspektionsanschluss 8 hineinragt. Der Messfühler 15 wird zur Überwachung einer Zustandsgröße des Förderstroms eingesetzt. Hierbei kann die Überwachung direkt oder indirekt erfolgen. Im Falle einer Temperaturmessung kann beispielsweise die Temperatur im Inspektionsanschluss 8 gemessen und mit der Temperatur des Förderstroms 6 korreliert werden. Alternativ oder zusätzlich kann auch ein Drucksensor als Messfühler 15 eingebracht werden, mit dem der Druck des Fördermediums überwacht wird. Zur Bestimmung der Temperatur stellt der Messfühler 15 einen Temperaturfühler dar.

Durch eine - hier nicht visualisierte - Ausgestaltung mit zwei Drucksensoren als Messfühler 15, die im ersten Bereich 13 und im zweiten Bereich 14 ausgebildet sind, ist es möglich, durch die Überwachung des Druckverlustes über dem Abscheideelement 5 Rückschlüsse auf die Funktionsfähigkeit des Abscheideelementes 5 zu ziehen und dieses zu überwachen. Grundsätzlich kann durch ein Ansteigen des Druckverlustes, beispielsweise gegenüber einem Referenzwert, der aus dem Druckverlust der Vergangenheit gebildet wird, darauf geschlossen werden, dass das Abscheideelement 5 zumindest teilweise zugesetzt ist. Durch einen Abfall des Druckverlustes gegenüber dem Referenzwert kann auf eine Beschädigung des Abscheideelements 5 geschlossen werden.

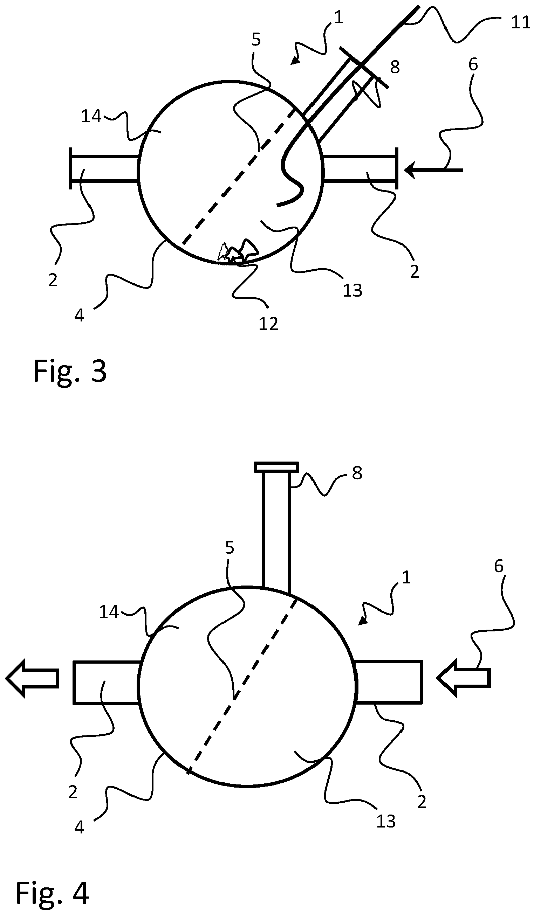

Fig. 3 zeigt schematisch ein zweites Ausführungsbeispiel einer erfindungsgemäßen Fremdkörperfalle 1. Gleiche Elemente wie im ersten Ausführungsbeispiel sind mit gleichen Bezugszeichen versehen, auf die Ausführungen zum ersten Ausführungsbeispiel wird insoweit Bezug genommen. Hier ist der Inspektionsanschluss 8 im ersten Bereich 13 ausgebildet. Durch den Inspektionsanschluss 8 wird ein Endoskop 11 bei der Inspektion eingeführt, durch welches der erste Bereich 13 auf Fremdkörper 12 untersucht und das Abscheideelement 5 inspiziert werden kann.

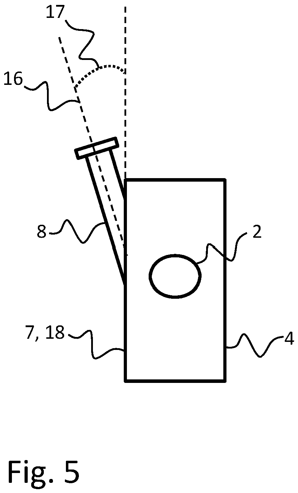

Fig. 4 zeigt schematisch eine seitliche Ansicht eines dritten Ausführungsbeispiels einer erfindungsgemäßen Fremdkörperfalle 1. Gleiche Elemente wie im ersten Ausführungsbeispiel sind mit gleichen Bezugszeichen versehen, auf die Ausführungen zum ersten Ausführungsbeispiel wird insoweit Bezug genommen. Hier ist der Inspektionsanschluss 8 seitlich im Deckel des Wartungszugangs 7 oder in der gegenüberliegenden Wand ausgeführt und ragt hier in den ersten Bereich 13 hinein, obwohl auch eine Ausgestaltung möglich ist, bei der der Inspektionsanschluss 8 in den zweiten Bereich 14 hineinragt. Fig. 5 zeigt eine um 90° gedrehte seitliche Ansicht. Eine Longitudinalachse 16 des Inspektionsanschlusses 8 schließt einen Winkel 17 mit einer Wand 18 der Abscheidekammer 4 oder dem Wartungszugang 7 ein, der kleiner ist als 20°.

Die erfindungsgemäße Fremdkörperfalle 1 erlaubt auf einfache Art und Weise durch den Inspektionsanschluss 8 eine schnelle Inspektion der Fremdkörperfalle 1 auf Fremdkörper 12 und eine Überwachung des Zustands des Abscheideelements 5. So kann für normale Inspektionen, bei denen üblicherweise keine Fremdkörper 12 in der Abscheidekammer 4 vorliegen, auf das aufwendige und zeitintensive Öffnen des Wartungszugangs 7 verzichtet werden.

### Bezugszeichenliste

- 1: Fremdkörperfalle
- 2: Förderanschluss
- 3: Flansch
- 4: Abscheidekammer
- 5: Abscheideelement
- 6: Förderstrom
- 7: Wartungszugang
- 8: Inspektionsanschluss
- 9: Flansch
- 10: Verschluss
- 11: Endoskop
- 12: Fremdkörper
- 13: erster Bereich
- 14: zweiter Bereich
- 15: Messfühler
- 16: Longitudinalachse
- 17: Winkel
- 18: Wand

## Patentansprüche

1. Verfahren zum Inspizieren einer Fremdkörperfalle (1) zum Einsatz in einer pneumatischen Förderleitung zur Förderung eines Förderstroms (6) umfassend ein Fördermedium und granulares Fördergut, die zwei Förderanschlüsse (2), die in eine Abscheidekammer (4) mit einem Abscheideelement (5) münden, welches strömungstechnisch so zwischen den Förderleitungsanschlüssen (2) ausgebildet ist, dass ein durch die Förderleitungsanschlüsse (2) und die Abscheidekammer (4) strömender Förderstrom (6) durch das Abscheideelement (5) strömt und dabei Fremdkörper (12) oberhalb einer vorgebbaren Größe abgeschieden werden, weiterhin umfassend einen reversibel verschließbaren Wartungszugang (7), **dadurch gekennzeichnet, dass** durch einen weiteren mit der Abscheidekammer (4) verbundenen Inspektionsanschluss (8) eine optische Inspektion der Abscheidekammer (4) auf das Vorliegen von Fremdkörpern (12) erfolgt.

2. Verfahren nach Anspruch 1, bei dem die Inspektion endoskopisch durch Einführen eines Endoskops (11) in die Abscheidekammer (4) erfolgt.

3. Verfahren nach einem der vorhergehenden Ansprüche, bei dem der Zustand des Abscheideelements (5) inspiziert wird.

4. Fremdkörperfalle (1) zum Abscheiden von Fremdkörpern (12) zum Einsatz in einer pneumatischen Förderleitung zur Förderung eines Förderstroms (6) umfassend ein Fördermedium und granulares Fördergut, umfassend zwei Förderanschlüsse (2), die in eine Abscheidekammer (4) mit einem Abscheideelement (5) münden, welches strömungstechnisch so zwischen den Förderleitungsanschlüssen (2) ausgebildet ist, dass ein durch die Förderleitungsanschlüsse (2) und die Abscheidekammer (4) strömender Förderstrom (6) durch das Abscheideelement (5) strömt und dabei Fremdkörper (12) einer vorgebbaren Spezifikation abgeschieden werden, weiterhin umfassend einen reversibel verschließbaren Wartungszugang (7), durch den die Abscheidekammer (4) gereinigt und gewartet werden kann, **dadurch gekennzeichnet, dass** ein weiterer Inspektionsanschluss (8) vorgesehen ist, durch den eine Inspektion der Abscheidekammer (4) auf das Vorliegen von Fremdkörpern (12) erfolgen kann.

5. Fremdkörperfalle (1) nach Anspruch 4, bei der das Abscheideelement (5) so ausgerichtet ist, dass es im Betrieb in einem ersten Bereich (13) zur Ansammlung von Fremdkörpern (12) kommen kann, wobei der Inspektionsanschluss (8) in einem zweiten Bereich (14) der Abscheidekammer (4) mündet, der von dem ersten Bereich (13) durch das Abscheideelement (5) getrennt ist.

6. Fremdkörperfalle (1) nach einem der Ansprüche 4 bis 5, bei der durch den Inspektionsanschluss (8) mindestens ein Messfühler (15) zur Überwachung einer Zustandsgröße des Förderstroms (6) in strömungstechnische Verbindung mit der Abscheidekammer (4) gebracht wird.

7. Fremdkörperfalle (1) nach Anspruch 6, bei der mindestens einer der folgenden Messfühler (15) in strömungstechnische Verbindung mit der Abscheidekammer (4) gebracht wird:
a. ein Temperaturfühler zur Überwachung der Temperatur des Förderstroms (6); und
b. ein Drucksensor zur Überwachung des Drucks des Förderstroms (6).
